# EUROPÄISCHE PATENTSCHRIFT

(11) **EP 3 697 591 B1**
(45) Veröffentlichungstag und Bekanntmachung des Hinweises auf die Patenterteilung: **07.06.2023**
(21) Anmeldenummer: 18773148.4
(22) Anmeldetag: 18.09.2018
(51) Int. Cl.: B29C 48/00, B29C 48/255, B29C 48/56, B29C 48/67, B29C 48/03, B29C 48/39, B29C 48/57, B29K 105/12, B29B 7/40, B29B 7/42

(54) **SCHERTEIL FÜR EINE PLASTIFIZIERSCHNECKE**
SHEARING PART FOR A PLASTICISING SCREW
ÉLÉMENT DE CISAILLEMENT POUR VIS DE PLASTIFICATION

(30) Priorität: 17.10.2017 DE 102017124091
(43) Veröffentlichungstag der Anmeldung: 26.08.2020
(73) Patentinhaber: KraussMaffei Technologies GmbH, 80997 München (DE)
(72) Erfinder: SCHADHAUSER, Maximilian, 82008 Unterhaching (DE); WÜRTELE, Martin, 86316 Friedberg (DE)
(74) Vertreter: Wilhelm, Ludwig
(86) Internationale Anmeldenummer: PCT/EP2018/075144
(87) Internationale Veröffentlichungsnummer: WO 2019/076561

(56) Entgegenhaltungen:
- WO-A1-02/00416
- WO-A1-86/06325
- DE-A1- 2 461 631
- DE-B3-102008 038 529
- GB-A- 2 111 397
- JP-A- S 565 748
- US-A- 4 128 341
- US-A- 5 035 509
- US-B1- 6 962 431

## Beschreibung

Die Erfindung betrifft ein Scherteil für eine Schnecke einer Plastifiziereinheit. Bevorzugtes Anwendungsgebiet sind die Verarbeitung von Langfasergranulaten (LFT-Granulate) und die Verarbeitung von Dry-Blends aus Schnittglasfasern und Kunststoff. In beiden Fällen stellt sich das Problem, dass im Bauteil Anhäufungen von Fasern vorliegen können. Bei LFT-Granulaten können die Faseranhäufungen auf eine schlechte Benetzung im Halbzeug zurückgeführt werden, bei der Verarbeitung von Dry-Blends sind die verwendeten Schnittglasfasern in sich derart kompakt, dass Sie innerhalb einer Plastifiziereinheit nicht zwangsweise vollständig aufgelöst werden.. Um solche Faseranhäufungen, auch Fasercluster genannt, zu vermeiden, sind aus dem Stand der Technik verschiedene Ausführungen von Scherteilen bekannt.

Bei einem sogenannten Wendelscherteil durchläuft die faserverstärkte Kunststoffschmelze einen Eintrittskanal mit einem üblicherweise halbkreisförmigen Querschnitt, überströmt einen Schersteg und durchströmt dann einen Austrittskanal mit einem üblicherweise ebenfalls halbkreisförmigen Querschnitt (JP-57-34936). Der Eintrittskanal hat einen offenen Eintrittskanalanfang und ein geschlossenes Eintrittskanalende. Der Austrittskanal hat demgegenüber einen geschlossenen Austrittskanalanfang und eine offenes Austrittskanalende. Anders ausgedrückt bedeutet dies folgendes. Der Eintrittskanal ist als Sacknut ausgebildet, bei der das offene Ende in Richtung des förderaufseitigen Endes des Wendelscherteils zeigt. Demgegenüber ist der Austrittskanal als Sacknut ausgebildet, bei der das offene Ende in Richtung des förderabseitigen Endes des Wendelscherteils zeigt.

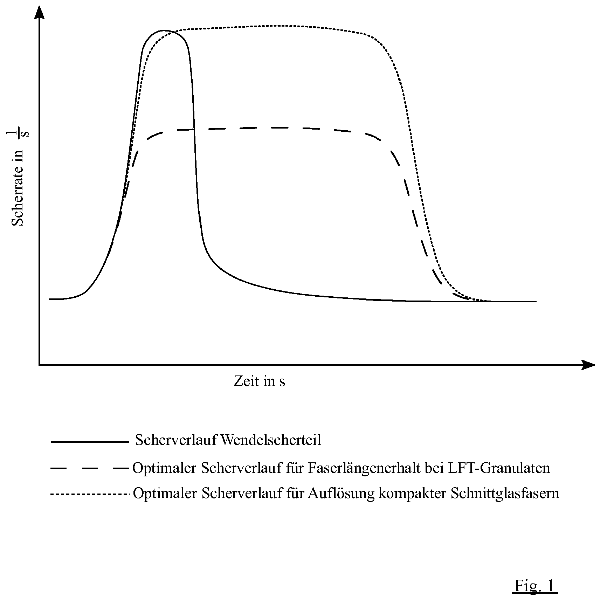

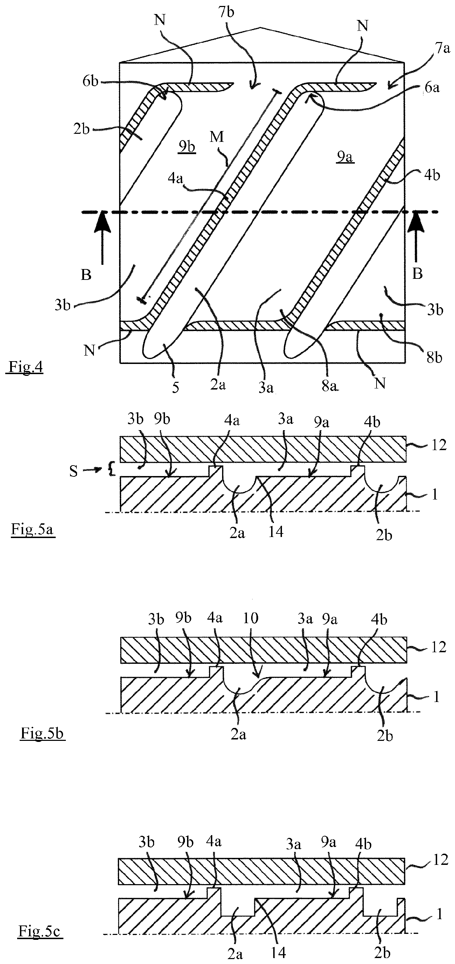

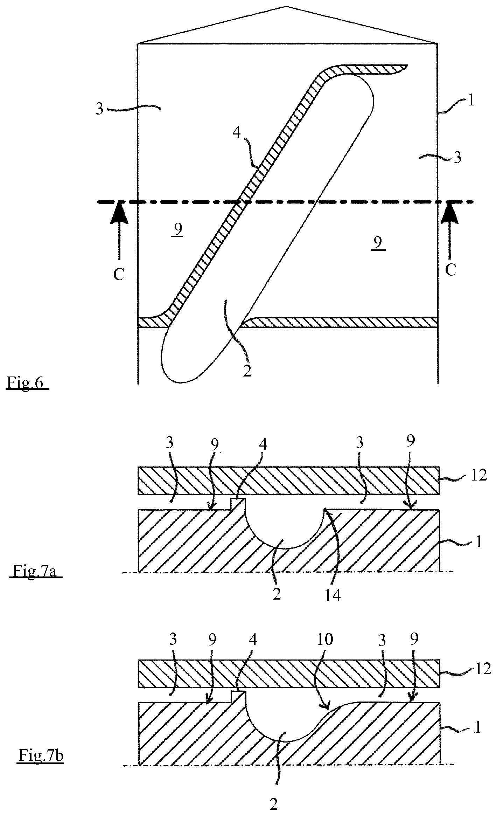

Aus der EP 0 904 924 A1 sind verschiedene Ausführungsformen eines Schneckenkopfes mit Nuten bekannt, welche helixförmig um die Längsachse des Schneckenkopfs verlaufen. Gemäß einer ersten Ausführungsform (Figuren 1 - 5) sind die Nuten als Eintritts- und Austrittskanal nach Art einer Sacknut ausgebildet und durch einen Schersteg voneinander getrennt. In einer weiteren Ausführungsform (Figur 6) offenbart dieses Dokument einen Schneckenkopf, bei welchem in der Oberfläche des Schneckenkopfs als Nuten ausgebildete Kanäle vorgesehen sind, die an beiden Enden offen sind. Parallel zu diesen Nuten und strömungsmäßig mit diesen verbunden liegen Flächen, welche orthogonal zur Längsachse der Nuten gesehen keilförmig ausgebildet sein können (Figur 5).

Die zu einer Patentfamilie gehörenden Dokumente WO 02/00416 A1 und NL 1015542 C2 offenbaren ein Scherteil, bei welchem ein Paar von als Sacknuten ausgebildeten Eintritts- und Austrittskanälen vorhanden sind, wobei das offene Ende der Eintrittskanäle in Richtung des hinteren Endes des Scherteils zeigt und das offene Ende der Austrittskanale in Richtung des vorderen Endes des Scherteil. Gemäß einer ersten Ausführungsform (Figuren 5 und 6) sind zwischen einem Eintritts- und einem Austrittskanal - in Strömungsrichtung gesehen - zunächst ein Schersteg mit einem geringen Scherspalt und nachfolgend eine Scherfläche mit einem demgegenüber vergrößerten Scherspalt vorgesehen. Gemäß einer weiteren Ausführungsform (Figuren 1 bis 4) ist zwischen einem Eintritts- und einem Austrittskanal - in Strömungsrichtung gesehen - lediglich eine Scherfläche vorgesehen. In beiden Ausführungsformen weisen der Eintrittskanal und der Austrittskanal jeweils eine Tiefe auf, bei der eine Scherwirkung auf die durch diese Kanäle strömende Schmelze im Wesentlichen vermieden wird. Demgegenüber liegt die Funktion der Scherflächen darin, dass bei deren Überströmen die Schmelze einer Scherwirkung ausgesetzt ist. Die Scherdeformation eines Fluidelements entspricht dem Integral der Scherrate über die Zeit, in der ein Schmelze- oder Fluidelement einer Scherung ausgesetzt ist und lässt sich über die Länge, die Breite und das Spaltmaß der Scherfläche einstellen. In beiden Ausführungsformen durchläuft die Schmelze den Eintrittskanal, überströmt die Scherfläche und durchströmt nachfolgend den Austrittskanal, von wo aus die Schmelze das Scherteil verlässt.

Wendelscherteile gemäß der eingangs genannten Art, d.h. mit Sacknuten und einem dazwischen liegenden Schersteg, der von Schmelze zu überströmen wird, sind insofern nachteilig bei der Verarbeitung von faserbeladener Schmelze, als beim Überströmen der Scherstege hohe Spitzen in der Scherrate auftreten und solche Spitzen zu einer Reduzierung der mittleren Faserlänge führen. Es ist jedoch stets ein Anliegen, eine hohe mittlere Faserlänge zu erhalten.

Wie eingangs erwähnt, kann es bei der Verarbeitung von faserverstärkten Granulaten zur Bildung von Faserclustern kommen. Die Schwierigkeit bei der Auflösung von solchen Faserclustern besteht darin, trotz hoher Scherdeformation eine hohe mittlere Faserlänge zu erhalten.

Die Figur 1 zeigt den Verlauf der Scherrate, die ein Fluidelement der Schmelze während des Durchströmens eines Scherteils erfährt. Die Erfahrung hat gezeigt, dass Spitzen im Verlauf der Scherrate, wie sie bei Wendelscherteilen auftreten, mit der Reduzierung der mittleren Faserlänge korrelieren, während die Scherdeformation (= Scherratenintegral über die Durchströmungszeit) mit dem Maß der Auflösung von Faserclustern korreliert. Zur Auflösung von Faserclustern wird folglich ein Verlauf der Scherrate angestrebt, wie er in der Figur 1 mit der gestrichelten Linie dargestellt und mit "Optimaler Scherverlauf für Faserlängenerhalt bei LFT-Granulaten" benannt ist.

Ein anschaulicher Vergleich hierzu ist das Auseinanderreißen von Watte. Ein schnelles Zerreißen eines Wattebausches führt zum Riss einzelner Fasern in der Watte, während ein langsames Auseinanderziehen des Wattebausches die Entschlaufung der Fasern und somit den Erhalt hoher mittlerer Faserlängen zur Folge hat.

Im Gegensatz zu LFT-Granulaten, liegen Filamentbündel bei kommerziell erhältlichen Schnittglasfasern hochgradig kompaktiert, mit einem Bindemittel versetzt und stark aneinander haftend vor. Dies ist für die Prozessierbarkeit, insbesondere die Dosierbarkeit der Halbzeuge notwendig,
Ein Scherteil gemäß der Ausführungsform aus den Figuren 1 bis 4 der Dokumente WO 02/00416 A1 und NL 1015542 C2 hat zwar den Vorteil, dass der vorgenannte Effekt des langsamen Auseinanderziehens von Faserclustern möglich ist und somit hohe mittlere Faserlängen erhalten bleiben. Dadurch, dass das Scherteil - im Querschnitt gesehen (siehe Figur 4 der NL 1015542 C2) - einen Eintrittskanal, einen Austrittskanal und eine dazwischenliegende Scherfläche aufweist, ergibt sich der Nachteil, dass die im Bereich der Scherfläche vorliegende, faserbeladene Kunststoffschmelze einer im gesamten Kanal gleichförmigen einachsigen Scherung ausgesetzt ist und keine Umwälzung stattfindet. In der Folge liegen zuvor agglomerierte Filamente nach dem Durchströmen des Scherteils zwar dispergiert vor, eine makroskopische Homogenisierungsoperation zum Ausgleich makroskaliger Konzentrationsschwankungen hat aber nicht stattgefunden. Insbesondere bei der Verarbeitung von Schnittglasfasern, kann eine derartige Entmischung im förderaufseitigen Verlauf des Plastifizierens nicht ausgeschlossen werden und muss entsprechend kompensiert werden.

US 6962431 B1 und JP-S 565748 A zeigen weitere Scherteile der vorgenannten Art. Ausgehend hiervon liegt der Erfindung die Aufgabe zugrunde, ein weiteres Mischteil anzugeben, das sich durch einen nahezu optimalen Scherverlauf auszeichnet und bei dem die vorgenannten Nachteile vermieden werden.

Die Lösung dieser Aufgabe erfolgt durch ein Scherteil mit den Merkmalen von Anspruch 1. Vorteilhafte Ausgestaltungen und Weiterentwicklungen sind in den abhängigen Ansprüchen angegeben.

Dadurch, dass der Eintrittskanal und der Austrittskanal unmittelbar nebeneinander liegend und aneinander grenzend angeordnet sind und der Eintrittskanal in Umfangsrichtung gesehen unmittelbar in den Austrittskanal übergeht, wobei dabei der Eintrittskanal und der Austrittskanal strömungsmäßig unmittelbar miteinander verbunden sind, derart, dass in den Eintrittskanal einströmende Schmelze unmittelbar von dem Eintrittskanal in den Austrittskanal überströmen kann, und wobei zudem der Austrittskanal als Scherfläche ausgebildet ist, kann auf einen separaten Austrittskanal wie beim Stand der Technik gemäß WO 02/00416 A1 und NL 1015542 C2 verzichtet, und somit die Schleppströmung im Bereich der Scherfläche mit einer Umwälzung überlagert werden.

Der Eintrittskanal geht in Umfangsrichtung gesehen unmittelbar in den Austrittskanal über, wobei dabei der Eintrittskanal und der Austrittskanal strömungsmäßig unmittelbar miteinander verbunden sind, derart, dass in den Eintrittskanal einströmende Schmelze unmittelbar von dem Eintrittskanal in den Austrittskanal überströmen kann.

Beim Überströmen von Schmelze aus dem Eintrittskanal in den Austrittskanal ergibt sich eine Strömungsrichtung, die im Wesentlichen quer zur Längsachse des Scherteils liegt.

Der Eintrittskanal weist eine Tiefe auf, bei der eine Scherwirkung auf die durch den Eintrittskanal strömende Schmelze im Wesentlichen vermieden wird, wohingegen der Austrittskanal als Scherfläche ausgebildet ist, derart, dass eine Scherwirkung auf die durch den Austrittskanal strömende Schmelze vorliegt.

Ein- und Austrittskanal können helixförmig um die Längsachse des Scherteils oder parallel zur Längsachse des Scherteils (1) verlaufen.

Die Scherfläche weist in radialer Richtung des Scherteils gesehen über ihre gesamte Erstreckung die gleiche Höhe auf, derart, dass ein Scherspalt mit konstanter Spaltbreite gebildet wird. Je nach Bedarf kann ein geeignet großer Scherspalt eingestellt werden. Bei einem vergleichsweise großen Scherspalt kommt es zu einem langsamen Auflösen von Faserclustern durch eine mittlere Scherrate über eine lange Scherzeit und es ergibt sich entsprechend eine mittlere Scherdeformation. Dadurch bleibt eine hohe mittlere Faserlänge erhalten, was sich positiv auf die mechanischen Eigenschaften des diese Fasern enthaltenen Bauteils auswirkt. Bei einem vergleichsweise kleinen Scherspalt ergibt sich eine hohe Scherrate über eine lange Scherzeit, es entsteht entsprechend eine hohe Scherdeformation. Dies ist von Vorteil bei der Verarbeitung von faserhaltigem Schnittglas, weil es dadurch besser aufgelöst werden kann.

Es ist vorgesehen, dass sich die Höhe der Scherfläche in radialer und/oder axialer Richtung des Scherteils gesehen verändert, so dass ein Scherspalt mit variabler Spaltbreite vorliegt. Dies kann beispielweise dann sinnvoll sein, wenn das Strömungsbild aufgrund der Fließeigenschaften eines speziellen Plastifikats bei konstanter Scherflächenhöhe fluidmechanisch gesehen Totpunkte aufweist. Gemäß der Erfindung ist an dem Übergang zwischen dem Eintrittskanal und dem

Austrittskanal eine Verrundung vorgesehen, insbesondere eine abgerundete Kanalgrenze. Eine solche Verrundung bietet mehrere Vorteile. Zum einen führt sie zu einer Kompression der Strömung und zur Erzeugung einer Dehnströmung.

Solche Dehnströmungen führen zu einer verbesserten Auflösung von Faserclustern. Zudem gibt es keine Kante, an der Fasern gebrochen werden könnten. Insbesondere bei einer Verrundung mit einem geeignet großen Radius kann das Risiko von Faserbruch signifikant verringert werden. Die Verrundung sollte derart ausgestaltet sein, dass der kritische Faserbiegeradius nicht unterschritten wird.

Alternativ ist die Kanalgrenze aber auch ohne Verrundung ausgebildet. Je nach Querschnitt des Eintrittskanals kann eine spitzwinkelige, insbesondere rechtwinkelig ausgebildete Kanalgrenze vorgesehen sein. Dies könnte beispielweise dann der Fall sein, wenn nicht nur Füllstoffagglomerate verteilt, sondern auch die Füllstoffe selbst gebrochen werden soll. Dies ist beispielsweise bei der Verarbeitung von Farbmasterbatches vorteilhaft.

Gemäß einer besonders vorteilhaften Ausführungsform können zwei Eintrittskanäle und zwei Austrittskanäle vorgesehen sein, wobei jeweils ein Eintrittskanal und ein Austrittskanal strömungsmäßig miteinander verbunden sind und eine Hälfte des Scherteils bilden, wobei die beiden Hälften helixförmig um die Längsachse des Scherteils angeordnet und durch Sperrstege strömungsmäßig voneinander getrennt sind. Es ergibt sich somit ein Paar von Eintrittskanälen, Scherflächen und Sperrstegen.

Durch die paarweise Anordnung wird ein bezüglich der Schneckenachse symmetrisches Druckprofil erzeugt. Dadurch wird eine Auslenkung des Scherteils bzw. der Schnecke aus der Schneckenachse verhindert und somit Verschleiß vorgebeugt.

Der Querschnitt des Eintrittskanals kann im Wesentlichen halbkreisförmig oder halbovalförmig ausgebildet sein. Der Vorteil einer halbkreisförmigen Ausführung ergibt sich aus der einfachen Fertigung mittels Kugelkopffräsern und einem homogenen Strömungsprofil ohne fluidmechanische Totpunkte.

Es sind auch Fälle denkbar, in welchen ein rechteckförmiger Querschnitt eines Eintrittskanals in Betracht gezogen werden kann, nämlich dann, wenn eine breite Verweilzeitverteilung erreicht werden soll.

Ferner kann der Eintrittskanalanfang vorzugsweise trichterförmig ausgebildet sein. Auf diese Weise werden Druckspitzen am Kanaleintritt und die damit verbundenen negativen Auswirkungen auf Faserlänge und Prozesskonstanz vermieden.

Vorzugsweise können der oder die Sperrstege in der Weise ausgebildet sein, dass ein parallel zum Eintrittskanal liegender Abschnitt vorliegt, und dass der oder die Sperrstege am förderaufseitigen Ende und am förderabseitigen Ende des Scherteils in Umfangsrichtung verlaufend ausgebildet sind derart, dass der oder die Sperrstege Endabschnitte aufweisen, die orthogonal zur Längsachse des Scherteils liegen. Damit wird erreicht, dass die Schmelze am Ende des jeweiligen Eintrittskanals nicht axial zur Schneckenspitze weiterströmen kann, sondern in Umfangsrichtung auf die Scherfläche gezwungen wird. Der jeweilige Eintrittskanal verfügt somit am förderabseitigen Ende des Scherteils über ein geschlossenes Eintrittskanalende. Förderaufseitig sind die Sperrstege so fortgeführt, dass die Schmelze nicht direkt in eine Scherfläche einströmen kann, sondern in die Einlaufkanäle gezwungen wird. Durch den vorgenannten Verlauf von dem oder den Sperrstegen ergibt sich bei dem bzw. den Austrittskanälen folgende Situation. Am förderabseitigen Ende des Scherteils liegt ein offenes Austrittskanalende und am förderaufseitigen Ende liegt ein geschlossener Austrittskanalanfang vor.

Ein erfindungsgemäßes Scherteil kann insbesondere bei einer Einschnecken-Plastifiziereinheit mit einem Zylinder und einer darin aufgenommenen Schnecke zur Anwendung kommen. Dabei kann es sich um eine Plastifiziereinheit einer Extrusionsanlage oder um eine Plastifiziereinheit einer Spritzgießmaschine handeln. Im letztgenannten Fall ist die Schnecke dreh- und linearantreibbar.

Ein erfindungsgemäßes Scherteil kann den Kopf der Schnecke bilden und dabei an seinem vorderen Ende vorzugsweise konisch ausgebildet sein. Ebenso ist es möglich, dass ein erfindungsgemäßes Scherteil von dem vorderen Ende der Schnecke beabstandet angeordnet ist. In letztgenanntem Fall können förderabseitig der Schnecke wahlweise weitere Förder- oder Mischzonen oder eine Rückstromsperre angeordnet werden.

Nachfolgend soll die Erfindung anhand von Ausführungsbeispielen und unter Bezugnahme auf die Figuren näher beschrieben werden.

Es zeigen:
- Figur 1: Verlauf der Scherrate, der ein Schmelzefluidelement ausgesetzt ist in Bezug zur Zeit.
- Figur 2: Erfindungsgemäßes Scherteil als Teil einer Schneckenwelle in einem Zylinder
- Figur 3: Schnitt entlang der Linie A-A in Figur 2
- Figur 4: Abgewickelte Darstellung eines Scherteils gemäß der Figur 1
- Figur 5a: Schnitt entlang der Linie B-B in Figur 4 mit halbkreisförmigem Eintrittskanalquerschnitt - ohne Verrundung der Kanalgrenzen
- Figur 5b: Schnitt entlang der Linie B-B in Figur 4 mit halbkreisförmigem Eintrittskanalquerschnitt - mit Verrundung der Kanalgrenzen
- Figur 5c: Schnitt entlang der Linie B-B in Figur 4 mit rechteckförmigem Eintrittskanalquerschnitt
- Figur 6: Abgewickelte Darstellung eines erfindungsgemäßen Scherteils mit nur einem Sperrsteg, einem Eintrittskanal, einem Austrittskanal und einer Scherfläche
- Figur 7a: Schnitt entlang der Linie C-C in Figur 6 mit halbkreisförmigem Eintrittskanalquerschnitt - ohne Verrundung der Kanalgrenzen
- Figur 7b: Schnitt entlang der Linie C-C in Figur 6 mit halbkreisförmigem Eintrittskanalquerschnitt - mit Verrundung der Kanalgrenzen
- Figur 8a: Strömungsprofil in einem erfindungsgemäßen Scherteil mit paarweiser Anordnung von Sperrstegen, Einlaufkanälen und als Scherfläche wirkenden Auslaufkanälen
- Figur 8b: Strömungsprofil bei einem Scherteil nach Art des Standes der Technik gemäß WO 02/00416 A1 und NL 1015542 C2, Figuren 1 bis 4.

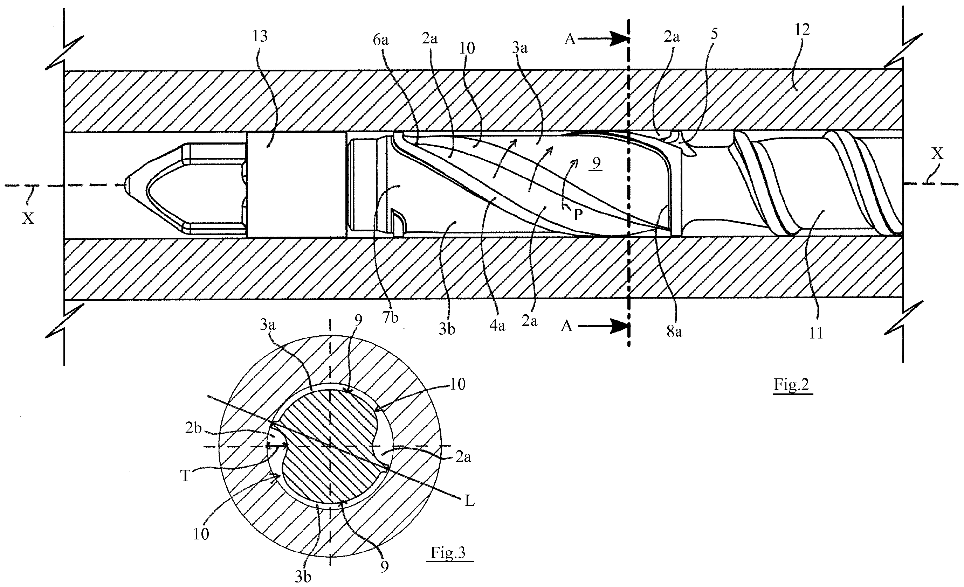

Die Figur 2 zeigt die Verwendung eines erfindungsgemäßen Scherteils am förderabseitigen Ende einer Schnecke 11, welche in einem Zylinder 12 dreh- und linearangetrieben angeordnet ist. Förderabseitig von dem Scherteil befindet sich eine Rückströmsperre 13 Gemäß den Figuren 2 und 3 verfügt ein erfindungsgemäßes Scherteil 1 über zwei Eintrittskanäle 2a, 2b und zwei Austrittskanäle 3a, 3b, die jeweils strömungsmäßig miteinander verbunden sind und je eine Hälfte des Scherteils 1 bilden, wie dies mit der Linie L in der Figur 3 angedeutet ist. Die beiden Hälften sind helixförmig um die Längsachse X des Scherteils 1 angeordnet und durch Sperrstege 4a, 4b strömungsmäßig voneinander getrennt. Eine Hälfte des Scherteils soll nachfolgend näher beschrieben werden. Diese umfasst einen Eintrittskanal 2a und einen Austrittskanal 3a, welche helixförmig um die Längsachse X des Scherteils 1 verlaufen. Der Eintrittskanal 2a hat einen am förderaufseitigen Ende des Scherteils befindlichen, offenen Eintrittskanalanfang 5, der vorliegend trichterförmig in förderaufseitige Richtung ausläuft. Am förderabseitigen Ende des Scherteils hat der Eintrittskanal ein geschlossenes Eintrittskanalende 6a. Der Austrittskanal 3a hat am förderabseitigen Ende des Scherteils ein offenes Austrittskanalende 7a und am förderaufseitigen Ende einen geschlossenen Austrittskanalanfang 8a.

Der Eintrittskanal 2a geht in dem Bereich zwischen förderaufseitigem und förderabseitigen Ende des Scherteils 1 in Umfangsrichtung gesehen unmittelbar in den Austrittskanal 3a über, wobei dabei der Eintrittskanal 2a und der Austrittskanal 3a strömungsmäßig unmittelbar miteinander verbunden sind, derart, dass in den Eintrittskanal 2a einströmende Schmelze unmittelbar von dem Eintrittskanal in den Austrittskanal überströmen kann, wie dies mit den Pfeilen P angedeutet ist. Der Eintrittskanal 2a weist in dem Bereich zwischen hinterem und vorderem Sperrsteg eine Tiefe T auf (siehe Figur 3), bei der eine Scherwirkung auf die durch den Eintrittskanal strömende Schmelze im Wesentlichen vermieden wird. Der Austrittskanal ist als Scherfläche 9 (siehe Figur 3) ausgebildet ist, derart, dass eine Scherwirkung auf die durch den Austrittskanal 3a strömende Schmelze vorliegt.

An dem Übergang 10 bzw. in dem Übergangsbereich 10 zwischen dem Eintrittskanal 2a und dem Austrittskanal 3a ist eine Verrundung 10 vorgesehen, um eine Bruchkante zu vermeiden und um eine Dehnströmung zu erzeugen. Die Verrundung kann eine abgerundete Kante sein oder - im Querschnitt - auch andere Formen annehmen, solange ein kritischer Biegeradius nicht unterschritten wird, der zu einem Bruch von Fasern führen könnte.

Gemäß der Figur 3 kann der Querschnitt des Eintrittskanals 2a im Wesentlichen halbovalförmig ausgebildet sein, er kann aber auch im Wesentlichen halbkreisförmig ausgebildet sein (siehe Figur 5a) oder andere Querschnitte aufweisen (siehe Figuren 5b und 5c).

Die Figur 4 zeigt eine abgewickelte Darstellung des erfindungsgemäßen Scherteils aus den Figuren 2 und 3 mit einer paarweisen Anordnung von zwei Eintrittskanälen 2a, 2b und zwei Austrittskanälen 3a, 3b. Jeweils ein Eintrittskanal und ein Austrittskanal sind strömungsmäßig miteinander verbunden und bilden eine Hälfte des Scherteils 1, wobei die beiden Hälften helixförmig um die Längsachse des Scherteils 1 angeordnet sind. Dem Eintrittskanal 2a ist ein erster Sperrsteg 4a und dem Eintrittskanal 2b ist ein zweiter Sperrsteg 4b zugeordnet. Die Sperrstege sind auf der in Drehrichtung gesehen abgewandten Seite des jeweiligen Eintrittskanals 2a, 2b platziert. Jeder der Sperrstege 4a, 4b ist in der Weise ausgebildet, dass er über einen parallel zum Eintrittskanal 2a, 2b liegenden und diesen begrenzenden Abschnitt M verfügt. Am förderaufseitigen Ende des Scherteils 1 und am förderabseitigen Ende des Scherteils 1 sind beide Sperrstege 4a, 4b in Umfangsrichtung verlaufend ausgebildet und verfügen somit über Endabschnitte N, die orthogonal zur Längsachse X des Scherteils liegen. Jeder Sperrsteg 4a, 4b ist in Förderrichtung also in der Weise fortgeführt, dass die Schmelze am Ende des jeweiligen Eintrittskanals 2a, 2b nicht axial zur Schneckenspitze weiterströmen kann, sondern in Umfangsrichtung auf die Scherfläche 9 gezwungen wird (siehe Pfeile P in der Figur 2). Somit verfügt jeder Eintrittskanal am förderabseitigen Ende des Scherteils über ein geschlossenes Eintrittskanalende 6a, 6b. Förderaufseitig sind die Sperrstege 4a, 4b so fortgeführt, dass die Schmelze nicht direkt in eine Scherfläche 9 einströmen kann, sondern in die Einlaufkanäle 2a, 2b gezwungen wird. Im Ergebnis verfügen die Austrittskanäle 2a, 2b am förderabseitigen Ende des Scherteils über ein offenes Austrittskanalende 7a, 7b und am förderaufseitigen Ende über einen geschlossenen Austrittskanalanfang 8a, 8b. Insgesamt ergibt sich somit ein Paar von Eintrittskanälen, Austrittskanälen, Scherflächen und Sperrstegen. Durch die paarweise Anordnung wird ein bezüglich der Schneckenachse X symmetrisches Druckprofil erzeugt. Dadurch wird eine Auslenkung des Scherteils 1 bzw. der Schnecke 11 aus der Schneckenachse X verhindert. Infolgedessen sind die Plastifizierschnecke 11 und das Scherteil 1 einem reduzierten Verschleiß ausgesetzt.

Die Figuren 5a bis 5c zeigen Schnittdarstellungen entlang der Linie B-B in der Figur 4 für unterschiedliche Ausführungsformen eines erfindungsgemäßen Scherteils 1. Die Figur 5a zeigt eine Schnittdarstellung mit einem halbkreisförmigem Querschnitt von Eintrittskanal 2a und Eintrittskanal 2b. Die in Figur 5b dargestellte Ausführungsform unterscheidet sich von derjenigen aus der Figur 5a darin, dass am Übergang vom Eintrittskanal 2a in den Austrittskanal 3a eine mit dem Bezugszeichen 10 versehene Verrundung der Kanalgrenzen 14 vorgesehen ist. Die Figur 5c zeigt eine Ausführungsform mit einem rechteckförmigen Querschnitt von Eintrittskanal 2a und Eintrittskanal 2b und demzufolge mit einer rechtwinkeligen Kanalgrenze 14.

Die Ausführungsform gemäß der Figur 5b mit Verrundung der Kanalgrenzen bietet mehrere Vorteile. Zum einen führt sie zu einer Kompression der Strömung und zur Erzeugung einer Dehnströmung. Solche Dehnströmungen führen zu einer verbesserten Auflösung von Faserclustern. Zudem gibt es keine Kante, an der Fasern gebrochen werden könnten. Insbesondere bei einer Verrundung mit einem geeignet großen Radius kann das Risiko von Faserbruch signifikant verringert werden. Die Verrundung sollte derart ausgestaltet sein, dass der kritische Faserbiegeradius nicht unterschritten wird. Die Ausführungsformen gemäß den Figuren 5a und 5c, d.h. ohne Verrundung, können dann zur Anwendung kommen, wenn nicht nur Füllstoffagglomerate verteilt, sondern auch die Füllstoffe selbst gebrochen werden soll. Dies ist beispielsweise bei der Verarbeitung von Farbmasterbatches vorteilhaft.

Die Scherfläche 9 kann in radialer Richtung des Scherteils gesehen über ihre gesamte Erstreckung die gleiche Höhe aufweisen, derart, dass ein Scherspalt mit konstanter Spaltbreite S gebildet wird. Je nach Bedarf kann ein geeignet großer Scherspalt eingestellt werden.

Die Figur 6 zeigt eine abgewickelte Darstellung eines erfindungsgemäßen Scherteils mit nur einem Eintrittskanal 2, einem Austrittskanal 3, einer Scherfläche 9, und einem Sperrsteg 4. Bei der Ausführungsform gemäß der Figur 7a hat der einzige Eintrittskanal 2 einen halbkreisförmigen Querschnitt mit einer spitzwinkeligen Kanalgrenze 14. Die Figur 7b zeigt eine Ausführungsform mit einer Verrundung 10 der Kanalgrenze 14.

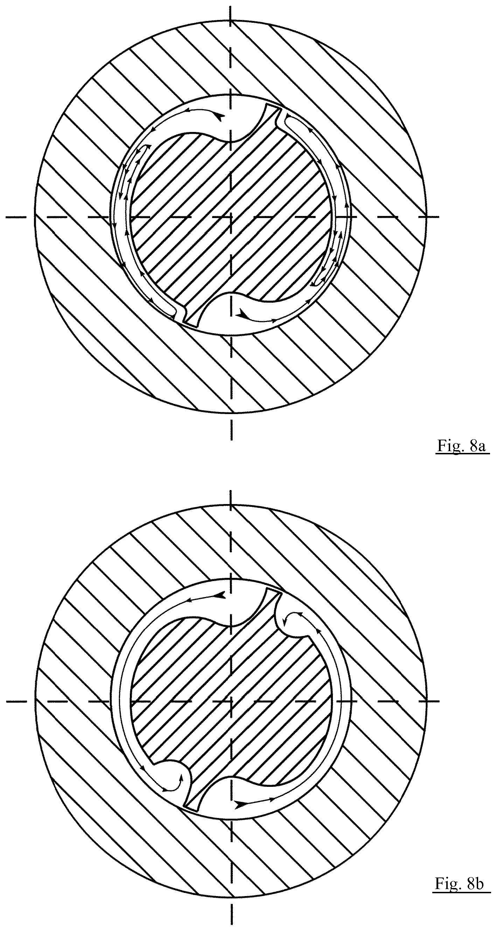

Die Figur 8a zeigt das Strömungsprofil bei einem erfindungsgemäßen Scherteil mit einer paarweisen Anordnung von Sperrstegen, Einlaufkanälen und als Scherfläche wirkenden Auslaufkanälen.

Die Figur 8b zeigt das Strömungsprofil bei einem Scherteil mit einer paarweisen Anordnung von Sperrstegen, Einlaufkanälen und Auslaufkanälen, wobei jeweils zwischen einem Eintrittskanal und einem Austrittskanal eine Scherfläche angeordnet ist. Ein Scherteil diesen Typs ist aus WO 02/00416 A1 und NL 1015542 C2, Figuren 1 bis 4, bekannt.

**Bezugszeichenliste**

| | |
|---|---|
| 1 | Scherteil |
| 2, 2a, 2b | Einlaufkanäle |
| 3, 3a, 3b | Auslaufkanäle |
| 4, 4a, 4b | Sperrsteg |
| 5 | Einlauf |
| 6a, 6b | Eintrittskanalende |
| 7a, 7b | Austrittskanalende |
| 8a, 8b | Austrittskanalanfang |
| 9, 9a, 9b | Scherflächen |
| 10 | Übergangsbereich mit Kantenverrundung |
| 11 | Schnecke |
| 12 | Zylinder |
| 13 | Rückströmsperre |
| 14 | Kanalgrenze |

## Patentansprüche

1. Scherteil für eine Plastifizierschnecke, mit wenigstens einem Eintrittskanal (2, 2a, 2b), der einen am förderaufseitigen Ende des Scherteils (1) befindlichen, offenen Eintrittskanalanfang und ein am förderabseitigen Ende des Scherteils (1) befindliches, geschlossenes Eintrittskanalende (6, 6a, 6b) aufweist, wobei der Eintrittskanal (2, 2a, 2b) eine Tiefe (T) aufweist, bei der eine Scherwirkung auf die durch den Eintrittskanal (2, 2a, 2b) strömende Schmelze im Wesentlichen vermieden wird, und wenigstens einem Austrittskanal (3, 3a, 3b), der ein am förderabseitigen Ende des Scherteils (1) befindliches, offenes Austrittskanalende (7, 7a, 7b) und einen am förderaufseitigen Ende des Scherteils (1) befindlichen, geschlossenen Austrittskanalanfang (8, 8a, 8b) aufweist, wobei der wenigstens eine Eintrittskanal (2, 2a, 2b) und der wenigstens eine Austrittskanal (3, 3a, 3b) helixförmig um die Längsachse (X) des Scherteils (1) oder parallel zur Längsachse (X) des Scherteils (1) verlaufen,
**dadurch gekennzeichnet, dass**
der Eintrittskanal (2, 2a, 2b) und der Austrittskanal (3, 3a, 3b) unmittelbar nebeneinander liegend und aneinander grenzend angeordnet sind, wobei an dem Übergang zwischen dem Eintrittskanal (2, 2a, 2b) und dem Austrittskanal (3, 3a, 3b) eine Verrundung (10) vorgesehen ist, insbesondere eine abgerundete Kanalgrenze (14), oder wobei eine Kanalgrenze (14) ohne Verrundung ausgebildet ist, wobei der Eintrittskanal (2, 2a, 2b) unmittelbar in den Austrittskanal (3, 3a, 3b) übergeht und dabei der Eintrittskanal (2, 2a, 2b) und der Austrittskanal (3, 3a, 3b) strömungsmäßig unmittelbar miteinander verbunden sind, derart, dass in den Eintrittskanal (2, 2a, 2b) einströmende Schmelze unmittelbar von dem Eintrittskanal (2, 2a, 2b) in den Austrittskanal (3, 3a, 3b) überströmen kann, wobei sich eine Strömungsrichtung ergibt, die im Wesentlichen quer zur Längsachse (X) des Scherteils (1) liegt, und dass der Austrittskanal (3, 3a, 3b) als Scherfläche (9) ausgebildet ist, derart, dass eine Scherwirkung auf die durch den Austrittskanal (3, 3a, 3b) strömende Schmelze vorliegt, wobei die Scherfläche (9) in radialer Richtung des Scherteils gesehen über ihre gesamte Erstreckung die gleiche Höhe aufweist, derart, dass ein Scherspalt mit konstanter Spaltbreite (S) gebildet wird oder wobei sich die Höhe der Scherfläche (9) in radialer und/oder axialer Richtung des Scherteils gesehen verändert, so dass ein Scherspalt mit variabler Spaltbreite (S) vorliegt.

2. Scherteil nach Anspruch 1,
**dadurch gekennzeichnet, dass**
zwei Eintrittskanäle (2a, 2b) und zwei Austrittskanäle (3a, 3b) vorgesehen sind, wobei jeweils ein Eintrittskanal (2a, 2b) und ein Austrittskanal (3a, 3b) strömungsmäßig miteinander verbunden sind und eine Hälfte des Scherteils (1) bilden, wobei die beiden Hälften helixförmig um die Längsachse (X) des Scherteils (1) angeordnet und durch Sperrstege (4a, 4b) strömungsmäßig voneinander getrennt sind.

3. Scherteil nach einem der vorstehenden Ansprüche,
**dadurch gekennzeichnet, dass**
der Querschnitt des Eintrittskanals (2, 2a, 2b) im Wesentlichen halbkreisförmig oder halbovalförmig ausgebildet ist.

4. Scherteil nach einem der vorstehenden Ansprüche,
**dadurch gekennzeichnet, dass**
der Eintrittskanalanfang (5) trichterförmig ausgebildet ist.

5. Scherteil nach einem der vorstehenden Ansprüche,
**dadurch gekennzeichnet, dass**
der oder die Sperrstege (4, 4a, 4b) in der Weise ausgebildet ist bzw. sind, dass ein parallel zum Eintrittskanal (2, 2a, 2b) liegender Abschnitt (M) vorliegt, und dass der oder die Sperrstege (4, 4a, 4b) am förderaufseitigen Ende und am förderabseitigen Ende des Scherteils in Umfangsrichtung verlaufend ausgebildet sind, wobei der oder die Sperrstege (4, 4a, 4b) Endabschnitte (N) aufweisen, die orthogonal zur Längsachse (X) des Scherteils (1) liegen.

6. Einschnecken-Plastifiziereinheit mit einem Zylinder (12) und einer darin aufgenommenen dreh- und gegebenenfalls linearantreibbaren Schnecke (11), wobei die Schnecke (11) ein Scherteil (1) nach einem der vorstehenden Ansprüche aufweist.

7. Plastifiziereinheit nach Anspruch 6,
**dadurch gekennzeichnet, dass**
das Scherteil (1) den Kopf der Schnecke bildet und seinem vorderen Ende konisch ausgebildet ist.

8. Plastifiziereinheit nach Anspruch 6,
**dadurch gekennzeichnet, dass**
das Scherteil (1) von dem vorderen Ende der Schnecke (11) beabstandet angeordnet ist.

## Claims

1. A shearing part for a plasticising screw, with at least one inlet channel (2, 2a, 2b), which has an open inlet channel start situated at the upstream end of the shearing part (1), and a closed inlet channel end (6, 6a, 6b) situated at the downstream end of the shearing part (1), wherein the inlet channel (2, 2a, 2b) has a depth (T) at which a shearing action on the melt flowing through the inlet channel (2, 2a, 2b) is substantially avoided, and with at least one outlet channel (3, 3a, 3b), which has an open outlet channel end (7, 7a, 7b) situated at the downstream end of the shearing part (1), and a closed outlet channel start (8, 8a, 8b) situated at the upstream end of the shearing part (1), wherein the at least one inlet channel (2, 2a, 2b) and the at least one outlet channel (3, 3a, 3b) run helically around the longitudinal axis (X) of the shearing part (1) or parallel to the longitudinal axis (X) of the shearing part (1),
**characterized in that**
the inlet channel (2, 2a, 2b) and the outlet channel (3, 3a, 3b) are arranged lying directly adjacent to one another and contiguous to one another, wherein at the transition between the inlet channel (2, 2a, 2b) and the outlet channel (3, 3a, 3b) a rounding (10) is provided, in particular a rounded channel boundary (14), or wherein a channel boundary (14) is formed without rounding, wherein the inlet channel (2, 2a, 2b) continues directly into the outlet channel (3, 3a, 3b) and the inlet channel (2, 2a, 2b) and the outlet channel (3, 3a, 3b) are fluidically connected here directly with one another, in such a way that melt flowing into the inlet channel (2, 2a, 2b) can flow over directly from the inlet channel (2, 2a, 2b) into the outlet channel (3, 3a, 3b), wherein a flow direction is produced which lies substantially transversely to the longitudinal axis (X) of the shearing part (1), and that the outlet channel (3, 3a, 3b) is configured as shearing surface (9), in such a way that a shearing action is present on the melt flowing through the outlet channel (3, 3a, 3b), wherein the shearing surface (9), viewed in radial direction of the shearing part, has the same height over its entire extent, such that a shear gap with constant gap width (S) is formed, or wherein the height of the shearing surface (9), viewed in radial and/or axial direction of the shearing part, changes so that a shear gap with variable gap width (S) is present.

2. The shearing part according to Claim 1,
**characterized in that**
two inlet channels (2a, 2b) and two outlet channels (3a, 3b) are provided, wherein respectively one inlet channel (2a, 2b) and one outlet channel (3a, 3b) are fluidically connected with one another and form a half of the shearing part (1), wherein the two halves are arranged helically around the longitudinal axis (X) of the shearing part (1) and are separated from one another fluidically by barrier webs (4a, 4b).

3. The shearing part according to one of the preceding claims,
**characterized in that**
the cross-section of the inlet channel (2, 2a, 2b) is configured substantially in a semi-circular or semi-oval shaped manner.

4. The shearing part according to one of the preceding claims,
**characterized in that**
the inlet channel start (5) is configured in a funnel-shaped manner.

5. The shearing part according to one of the preceding claims,
**characterized in that**
the barrier web(s) (4, 4a, 4b) is or respectively are configured in such a way that a portion (M) is present lying parallel to the inlet channel (2, 2a, 2b), and that the barrier web(s) (4, 4a, 4b) are configured at the upstream end and at the downstream end of the shearing part running in circumferential direction, wherein the barrier web(s) (4, 4a, 4b) have end portions (N) which lie orthogonally to the longitudinal axis (X) of the shearing part (1).

6. A single-screw plasticising unit with a cylinder (12) and with a rotatably and, if applicable, linearly drivable screw (11) received therein, wherein the screw (11) has a shearing part (1) according to one of the preceding claims.

7. The plasticising unit according to Claim 6,
**characterized in that**
the shearing part (1) forms the head of the screw, and at its front end is configured conically.

8. The plasticising unit according to Claim 6,
**characterized in that**
the shearing part (1) is arranged spaced apart from the front end of the screw (11).

## Revendications

1. Élément de cisaillement pour vis de plastification comprenant au moins un canal d'entrée (2, 2a, 2b) qui présente un début de canal d'entrée ouvert se trouvant sur l'extrémité d'avancement de la partie de cisaillement (1), et une extrémité de canal d'entrée (6, 6a, 6b) fermée se trouvant sur l'extrémité d'évacuation de la partie de cisaillement (1), dans lequel le canal d'entrée (2, 2a, 2b) présente une profondeur (T) avec laquelle une action de cisaillement sur la masse fondue s'écoulant à travers le canal d'entrée (2, 2a, 2b) est essentiellement évitée, et au moins un canal de sortie (3, 3a, 3b) qui présente une extrémité de canal de sortie (7, 7a, 7b) ouverte se trouvant sur l'extrémité d'évacuation de la partie de cisaillement (1) et un début de canal de sortie (8, 8a, 8b) fermé se trouvant sur l'extrémité d'avancement de la partie de cisaillement (1), dans lequel l'au moins un canal d'entrée (2, 2a, 2b) et l'au moins un canal de sortie (3, 3a, 3b) sont hélicoïdaux sur l'axe longitudinal (X) de la partie de cisaillement (1) ou parallèles à l'axe longitudinal (X) de la partie de cisaillement (1),
**caractérisé en ce que**
le canal d'entrée (2, 2a, 2b) et le canal de sortie (3, 3a, 3b) reposent directement l'un à côté de l'autre et sont délimités l'un contre l'autre, dans lequel dans la transition entre le canal d'entrée (2, 2a, 2b) et le canal de sortie (3, 3a, 3b), un congé arrondi (10) est prévu, en particulier une limite de canal (14) arrondie, ou dans lequel une limite de canal (14) sans congé arrondi est formée, dans lequel le canal d'entrée (2, 2a, 2b) passe directement dans le canal de sortie (3, 3a, 3b) et ainsi le canal d'entrée (2, 2a, 2b) et le canal de sortie (3, 3a, 3b) sont reliés directement entre eux en écoulement de telle sorte que de la masse fondue entrant dans le canal d'entrée (2, 2a, 2b) peut passer directement du canal d'entrée (2, 2a, 2b) au canal de sortie (3, 3a, 3b), dans lequel il en ressort une direction d'écoulement qui est essentiellement transversale à l'axe longitudinal (X) de la partie de cisaillement (1), et que le canal de sortie (3, 3a, 3b) est formé en tant que face de cisaillement (9) de telle sorte qu'une action de cisaillement sur la masse fondue s'écoulant à travers le canal de sortie (3, 3a, 3b) est présente, dans lequel la face de cisaillement (9), vu dans le sens radial de la partie de cisaillement, présente la même hauteur sur tout son allongement, de telle sorte qu'une fente de cisaillement avec une largeur de fente (S) constante est formée ou dans lequel la hauteur de la face de cisaillement (9) vu sans le sens radial et/ou axial de la partie de cisaillement se modifie, de sorte qu'une fente de cisaillement avec une largeur de fente (S) variable est présente.

2. Élément de cisaillement selon la revendication 1,
**caractérisé en ce que**
deux canaux d'entrée (2a, 2b) et deux canaux de sortie (3a, 3b) sont prévus, sachant que respectivement un canal d'entrée (2a, 2b) et un canal de sortie (3, 3a, 3b) sont reliés entre eux en écoulement et forment une moitié de la partie de cisaillement (1), dans lequel les deux moitiés sont disposées en hélice sur l'axe longitudinal (X) de la partie de cisaillement (1) et sont séparées entre elles en écoulement par des montants de blocage (4a, 4b).

3. Élément de cisaillement selon l'une des revendications précédentes,
**caractérisé en ce que**
la section transversale du canal d'entrée (2, 2a, 2b) est essentiellement en demi-cercle ou en demi-ovale.

4. Élément de cisaillement selon l'une des revendications précédentes,
**caractérisé en ce que**
le début de canal d'entrée (5) est en forme de trémie.

5. Élément de cisaillement selon l'une des revendications précédentes,
**caractérisé en ce que**
le(s) montant(s) de blocage (4, 4a, 4b) est/sont formé(s) de façon qu'un tronçon (M) parallèle au canal d'entrée (2, 2a, 2b) est présent, et que le(s) montant(s) de blocage (4, 4a, 4b) sont formés passant dans le sens périphérique sur l'extrémité d'avancement et sur l'extrémité d'évacuation de la partie de cisaillement, dans lequel le(s) montant(s) de blocage (4, 4a, 4b) présente(nt) des tronçons d'extrémité (N) qui sont orthogonaux à l'axe longitudinal (X) de la partie de cisaillement (1).

6. Unité de plastification monovis comprenant un cylindre (12) et une vis (11) reçue à l'intérieur et pouvant être entraînée en rotation et le cas échéant de manière linéaire, dans lequel la vis (11) présente une partie de cisaillement (1) selon l'une des revendications précédentes.

7. Unité de plastification selon la revendication 6, **caractérisé en ce que**
la partie de cisaillement (1) forme la tête de la vis et son extrémité avant est conique.

8. Unité de plastification selon la revendication 6, **caractérisé en ce que**
la partie de cisaillement (1) est disposée éloignée de l'extrémité avant de la vis (11).
